Europäisches Patentamt

European Patent Office

Office européen des brevets

(11) Veröffentlichungsnummer: **0 185 238**
**A1**

(12) **EUROPÄISCHE PATENTANMELDUNG**

(21) Anmeldenummer: **85115222.3**

(22) Anmeldetag: **30.11.85**

(51) Int. Cl.⁴: **H 01 H 3/26**
**H 02 P 7/00**

(30) Priorität: **19.12.84 CH 201/85**

(43) Veröffentlichungstag der Anmeldung:
**25.06.86 Patentblatt 86/26**

(84) Benannte Vertragsstaaten:
**CH DE FR LI SE**

(71) Anmelder: **BBC Aktiengesellschaft Brown, Boveri & Cie.**
**Haselstrasse**
**CH-5401 Baden(CH)**

(72) Erfinder: **Herzig, Peter**
**Stritengässli 24**
**CH-5000 Aarau(CH)**

(54) **Antrieb für einen Schalter.**

(57) Der vorzugsweise für einen Hochspannungs-Trennschalter (T) vorgesehene Antrieb enthält einen Antriebsmotor (M), welcher über eine Welle (W) auf einen beweglichen Kontakt des Schalters wirkt und in Serie geschaltet eine Rotorwicklung (R) und eine Statorwicklung (S) aufweist. Zur Erzielung einer von der Stellung des Schalters abhängigen Laufrichtung des Antriebsmotors (M) enthält der Antrieb ferner eine Steuerschaltung. Bei diesem Abtrieb soll die Anzahl der Adern eines Verbindungskabels (L) vom Antriebsgehäuse (K) zu einem Steuerschrank (N) möglichst gering gehalten werden. Dies wird dadurch erreicht, dass die Steuerschaltung einen in Abhängigkeit von der Stellung des Schalters steuerbaren Gleichrichter (G) aufweist, dessen einem Wechselstromeingang entweder die Stator (S)- oder die Rotorwicklung (R) des Antriebsmotors (M) vorgeschaltet ist und dessen Gleichstromausgang an die in Serie zur vorgeschalteten Wicklung (z.B. Statorwicklung S) liegende Wicklung (z.B. Rotorwicklung R) des Antriebsmotors (M) angeschlossen ist.

Fig.1

119/84

19.12.84
Ka/eh

- 1 -

Antrieb für einen Schalter

Bei der Erfindung wird ausgegangen von einem Antrieb für einen Schalter nach dem Oberbegriff des Anspruchs 1.

Mit diesem Oberbegriff nimmt die Erfindung Bezug auf einen Antrieb wie er etwa bei dem aus den Brown Boveri Mitt. 65 1978 (4) 236 - 239 bekannten Schalter verwendet wird. Beim bekannten Antrieb sind die Statorwicklungsanschlüsse sowie die Anschlüsse von 2 die Schalterstellung anzeigenden Kontakten aus dem Antriebsgehäuse herausgeführt und in einem Steuerschrank verkabelt. Dies erfordert zumindest 8 Steuerkabeladern.

Die Erfindung, wie sie in den Ansprüchen gekennzeichnet ist, löst die Aufgabe, einen Antrieb der eingangs genannten Art anzugeben, bei dem unter Beibehaltung von grosser Betriebssicherheit der grösste Teil der Steuerkabeladern zwischen Antriebsgehäuse und Steuerschrank eingespart ist.

Der erfindungsgemässe Antrieb zeichnet sich dadurch aus, dass zwischen Antriebsgehäuse und Steuerschrank lediglich ein zweiadriger Stromanschluss für den Antriebsmotor verkabelt ist, wohingegen die Laufrichtungsabsteuerung des Antriebsmotors unmittelbar im Antriebsgehäuse untergebracht ist und ohne Verwendung von aufwendigen Steuerschützen direkt durch Stellungskontakte erfolgt.

Die Erfindung wird nachfolgend anhand eines in der Zeichnung beschriebenen Ausführungsbeispiels näher erläutert:

Hierbei zeigt:

Fig. 1    ein Schaltbild eines erfindungsgemäss ausgeführten Antriebs und zwar unmittelbar nach Abgabe eines Einschaltbefehls an einen zu betätigenden Schalter und

Fig. 3    das Schaltbild gemäss Fig. 1, jedoch unmittelbar nach Abgabe eines Ausschaltbefehls an den Schalter.

In allen Figuren ist ein Trennschalter T einer Hochspannungsschaltanlage dargestellt, auf dessen beweglichen Kontakt eine von einem Antriebsmotor M bewegte Welle W wirkt. Die Welle W wirkt ferner auf Kontakte $A_1$, $A_2$, $B_1$, $B_2$. Diese Kontakte zeigen die Schaltstellung des Trennschalters T an. Die Kontakte $A_1$ und $A_2$ sind bei geöffnetem Trennschalter T geöffnet und schliessen während des Einschaltens, während die Kontakte $B_1$ und $B_2$ bei geöffnetem Trennschalter T geschlossen sind und während des Einschaltens bei bereits geschlossenen Kontakten $A_1$ imd $A_2$ geöffnet werden. Entsprechend sind die Kontakte $B_1$ und $B_2$ bei geschlossenem Trennschalter T geöffnet und schliessen während des Ausschaltens, während die Kontakte $A_1$ und $A_2$ bei geschlossenem Trennschalter T geschlossen sind und während des Ausschaltens bei bereits geschlossenen Kontakten $B_1$ und $B_2$ geöffnet werden.

Der Antriebsmotor M ist in einem Antriebsgehäuse K mit einem zweipoligen Stromanschluss mit den Polen 1 und 2 untergebracht, welche über ein zweiadriges Verbindungskabel L mit einem Stromanschluss eines Steuerschrankes N verbunden sind.

Der Antriebsmotor M ist als Hauptschlussmotor mit in Serie geschalteten Wicklungen ausgebildet. Eine als Statorwicklung S ausgeführte Wicklung ist mit ihrem einen Anschluss mit einem Pol einer im Steuerschrank N befindlichen Stromquelle Q verbindbar und mit ihrem anderen Anschluss mit einem Wechselstromanschluss eines im Antriebsgehäuse K vorgesehenen Gleichrichters G verbunden. Die Anschlüsse einer als Rotorwicklung R ausgeführten Wicklung des Antriebsmotors M sind jeweils mit einem Pol des Gleichstromausganges des Gleichrichters G verbunden.

Der Gleichrichter G ist als Brücke geschaltet und ist von zwei zueinander parallel geschalteten Halbbrückenmodulen $G_1$ und $G_2$ gebildet, welche jeweils zwei gleichsinnig in Reihe geschaltete Dioden $D_1$ und $D_2$ bzw. $D_3$ und $D_4$ enthalten. Parallel zu den Dioden $D_1$ und $D_2$ bzw. $D_3$ und $D_4$ jedes Halbbrückenmoduls $G_1$ bzw. $G_2$ ist jeweils ein spannungsabhängiger Widerstand $V_1$ bzw. $V_2$ geschaltet, durch welchen die Dioden $D_1$ und $D_2$ bzw. $D_3$ und $D_4$ vor möglicherweise auftretenden Ueberspannungen geschützt werden. Zwischen den gleichpoligen und als Gleichstromausgang wirkenden Verbindungspunkten der Dioden $D_1$ und $D_3$ bzw. $D_2$ und $D_4$ und den Dioden $D_1$, ..., $D_4$ befinden sich die Kontakte $A_1$, $A_2$, $B_1$ und $B_2$. Die Kontakte $A_1$ bzw. $B_2$ sind zwischen den Pulspol des Gleichstromausganges des Gleichrichters G und die Dioden $D_1$ bzw. $D_3$ geschaltet. Die Kontakte $A_2$ bzw. $B_1$ sind zwischen den Minuspol des Gleichstromausganges und die Diode $D_2$ bzw. $D_4$ geschaltet. Die Kontakte sind hierbei so angeordnet, dass zwei jeweils den Einschalt- oder Ausschaltzustand des Trennschalters T anzeigende Kontakte, z.B. $A_1$ und $A_2$, sich
auf einander diagonal gegenüberliegenden Brückenzweigen
des Gleichrichters G befinden.

Die Gleichstromquelle Q ist beim Einschalten über Kontakte
KE und KE' und beim Ausschalten über Kontakte KA und KA'
mit den Polen 1 und 2 des Stromanschlusses des Antriebsgehäuses K verbindbar. Die Kontakte KE und KE' werden
beim Einschalten bei geöffneten Kontakten KA und KA'
gleichzeitig geschlossen und nach Beendigung des Einschaltvorganges geöffnet. Entsprechend werden die Kontakte
KA und KA' beim Ausschalten bei geöffneten Kontakten
KE und KE' gleichzeitig geschlossen und nach Beendigung
des Ausschaltvorganges geöffnet. Die Kontakte KE, KE',
KA und KA' sind in einer Brückenschaltung angeordnet
und zwar derart, dass der Pluspol der Gleichstromquelle
Q beim Einschalten über den Kontakt KE an den Pol 2
und der Minuspol über den Kontakt KE' an den Pol 1 des
Stromanschlusses des Antriebsgehäuses K geführt sind.
Beim Ausschalten sind der Pluspol der Gleichstromquelle
Q über den Kontakt KA' an den Pol 1 und der Minuspol
über den Kontakt KA an den Pol 2 geführt, wodurch die
Polarität der Gleichstromquelle Q am Stromanschluss
des Antriebsgehäuses K gegenüber der Polarität beim
Einschalten geändert ist.

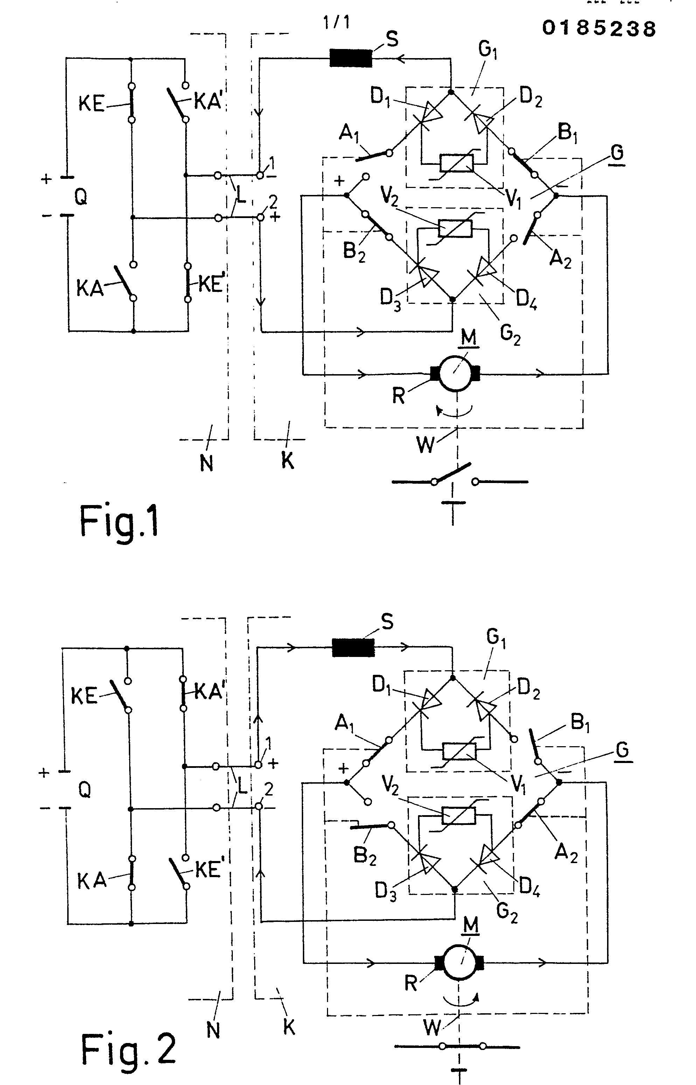

Die Wirkungsweise des erfindungsgemässen Antriebs ist
die folgende: Ist der Trennschalter T, wie in Fig. 1
angegeben ist, geöffnet, so wird der Einschaltvorgang
durch Abgabe eines Einschaltbefehls in einem nicht dargestellten Befehlskreis eingeleitet und die Gleichstromquelle Q durch Schliessen der Kontakte KE UND KE' an
den Stromanschluss des Antriebsgehäuses K gelegt. Der
Pol 1 des Stromanschlusses befindet sich nun auf Minuspotential, der Pol 2 hingegen auf Pluspotential.

Bei dem in Fig. 1 dargestellten geöffneten Zustand des Trennschalters T sind von den die Schalterstellung anzeigenden Kontakten die Kontakte $A_1$ und $A_2$ geöffnet, die Kontakte $B_1$ und $B_2$ hingegen geschlossen. Durch den Antriebsmotor M fliesst daher ein Gleichstrom, welcher vom Pol 2 über die Diode $D_3$, den Kontakt $B_2$, die Rotorwicklung R, den Kontakt $B_1$, die Diode $D_2$ und die Statorwicklung S zum Pol 1 gerichtet ist. Die Richtung dieses Gleichstromes ist in Fig. 1 durch Pfeile angegeben. Dieser Gleichstrom bewirkt den Aufbau von Magnetfeldern im Rotor R- und Statorwicklung S, welche dem Antriebsmotor M und damit der Welle W eine definierte Laufrichtung (beispielsweise im Uhrzeigersinn) aufzwingen.

Im weiteren Verlauf des Einschaltens schliessen zwar auch die Kontakte $A_1$ und $A_2$, jedoch behält der Gleichstrom seinen Richtungssinn und seinen Strompfad bei. Sobald der Trennschalter T geschlossen ist, öffnen die Kontakte $B_1$ und $B_2$. Kurz danach öffnen auch die Kontakte KE und KE', wodurch die Gleichstromquelle Q vom Stromanschluss des Antriebsgehäuses K abgetrennt wird.

Der Ausschaltvorgang wird durch Abgabe eines Ausschaltbefehls im nicht dargestellten Befehlskreis eingeleitet und die Gleichstromquelle Q durch Schliessen der Kontakte KA und KA' an den Stromanschluss des Antriebsgehäuses K gelegt. Der Pol 1 des Stromanschlusses befindet sich nun auf Pluspotential, der Pol 2 hingegen auf Minuspotential.

Bei dem in Fig. 2 dargestellten geschlossenen Trennschalter T sind von den die Schalterstellung anzeigenden Kontakten die Kontakte $B_1$ und $B_2$ geöffnet, die Kontakte $A_1$ und $A_2$ geschlossen. Durch den Antriebsmotor M fliesst daher ein Gleichstromk welcher vom Pol 1 über die Statorwicklung S, die Diode $D_1$, den Kontakt $A_1$, die Rotor-

wicklung R, den Kontakt $A_2$, und die Diode $D_4$ zum Pol 2 gerichtet ist. Die Richtung dieses Gleichstromes ist in Fig. 2 durch Pfeile angegeben. Dieser Gleichstrom bewirkt den Aufbau von Magnetfeldern in Rotor R- und Statorwicklung S. Da der Gleichstrom in der Statorwicklung S dem nach dem Einschalten in der Statorwicklung S fliessenden Gleichstrom (Fig. 1) entgegengesetzt gerichtet ist und die Gleichströme in der Rotorwicklung R sowohl beim Ein- als auch beim Ausschalten gleich gerichtet sind, zwingen die in Stator S- und Rotorwicklung R aufgebauten Mangetfelder dem Antriebsmotor M und damit der Welle W eine Laufrichtung auf, welche der Laufrichtung beim Einschalten entgegensetzt gerichtet ist (beispielsweise im Gegenuhrzeigersinn), wodurch der Trennschalter T geöffnet wird.

Beim Oeffnen des Trennschalters T schliessen zwar auch die Kontakte $B_1$ und $B_2$, jedoch behält der Gleichstrom seinen Richtungssinn und seinen Strompfad bei. Sobald der Trennschalter T geöffnet ist, öffnen die Kontakte $A_1$ und $A_2$. Kurz danach öffnen auch die Kontakte KA und KA', wodurch die Gleichstromquelle Q vom Stromanschluss des Antriebsgehäuses K abgetrennt wird.

Es ist auch möglich, statt der Rotorwicklung R des Antriebsmotors M die Statorwicklung S an den Gleichstromausgang des Gleichrichters G anzuschliessen. In diesem Fall ist die Rotorwicklung R anstelle der Statorwicklung S zwischen einem der Wechselstromanschlüsse des Gleichrichters G und der Gleichstromquelle Q anzuordnen.

0185238

PATENTANSPRÜCHE

1. Antrieb für einen Schalter (Trennschalter T) mit einem auf einen beweglichen Schalterkontakt wirkenden Antriebsmotor (M) mit in Serie geschalteter Rotor (R)- und Statorwicklung (S) und mit einer Steuerschaltung zur Erzielung einer von der Stellung des Schalters (Trennschalter T) abhängigen Laufrichtung des Antriebsmotors (M), dadurch gekennzeichnet, dass die Steuerschaltung einen in Abhängigkeit von der Stellung des Schalters (Trennschalters T) steuerbaren Gleichrichter (G) aufweist, dessen einem Wechselstromeingang entweder die Stator (S)- oder die Rotorwicklung (R) vorgeschaltet ist, und dessen Gleichstromausgang an die in Serie zur vorgeschalteten Wicklung (z.B. Statorwicklung S) liegende Wicklung (z.B. Rotorwicklung R) des Antriebsmotors angeschlossen ist.

2. Antrieb nach Anspruch 1, dadurch gekennzeichnet, dass der Gleichrichter (G) von Kontakten ($A_1$, $A_2$, $B_1$, $B_2$) gesteuert ist, welche den Ein- und den Ausschaltzustand des Schalters anzeigen.

3. Antrieb nach Anspruch 2, dadurch gekennzeichnet, dass der Gleichrichter (G) ausgeführt ist als Brückenschaltung mit vier diodenbeschalteten Brückenzweigen, in denen zwei jeweils den Ein- oder Ausschaltzustand anzeigende Kontakte (z.B. $A_1$, $A_2$) einander diagonal gegenüberliegend angeordnet sind.

4. Antrieb nach Anspruch 3, dadurch gekennzeichnet, dass je zwei gleichsinnig gepolte Dioden (z.B. $D_1$, $D_2$) des Gleichrichters (G) zu einer Halbbrücke (z.B. $G_1$) zusammengefasst sind, welche Halbbrücke (z.B. $G_1$) einen spannungsabhängigen Widerstand (z.B. $V_1$) aufweist, der parallel zu den Dioden (z.B. $D_1$, $D_2$) der Halbbrücke (z.B. $G_1$) geschaltet ist.

Fig.1

Fig.2

## EUROPÄISCHER RECHERCHENBERICHT

Europäisches
Patentamt

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl 4) |
|---|---|---|---|
| Y | FR-E- 44 664 (MORS) <br> * Seite 1, Zeile 1 - Seite 2, Zeile 14; Seite 2, Zeilen 41-67 * | 1-3 | H 01 H 3/26 <br> H 02 P 7/00 |
| Y | FR-A- 745 002 (MORS) <br> * Figur 6; Seite 2, Zeilen 48-59 * | 1-3 | |
| Y | US-A-3 484 672 (BAILEY) <br> * Insgesamt * | 1 | |
| A | DE-C- 560 045 (A.E.G.) <br> * Figur 2; Seite 2, Zeilen 90-98, 108-116 * | 1 | |
| A | US-A-2 669 622 (OWENS) <br> * Spalte 2, Zeilen 23-28; Spalte 9, Zeile 23 - Spalte 10, Zeile 55 * | 1 | RECHERCHIERTE SACHGEBIETE (Int Cl.4) |
| A | DE-B-1 130 042 <br> (ELEKTRO-MECHANIK) | | H 01 H 3/00 <br> H 01 H 71/00 <br> H 01 H 33/00 <br> H 02 P 7/00 |

Der vorliegende Recherchenbericht wurde für alle Patentansprüche erstellt

| Recherchenort <br> DEN HAAG | Abschlußdatum der Recherche <br> 26-03-1986 | Prüfer <br> DESMET W.H.G. |
|---|---|---|

KATEGORIE DER GENANNTEN DOKUMENTE
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82